# EUROPEAN PATENT APPLICATION

(11) **EP 4 324 645 A1**
(43) Date of publication of application: **21.02.2024**
(21) Application number: 22787914.5
(22) Date of filing: 14.03.2022
(51) Int. Cl.: B32B 27/34, B32B 1/08, B32B 27/18, F16L 11/04, F16L 11/127, C08L 23/00, C08L 77/06

(54) **HOLLOW STRUCTURE FOR FUEL**

(30) Priority: 13.04.2021 JP 2021067746
(71) Applicant: MITSUBISHI GAS CHEMICAL COMPANY, INC., Chiyoda-ku Tokyo 100-8324 (JP)
(72) Inventor: YAMASHITA Momoko, Hiratsuka-shi, Kanagawa 254-0016 (JP); SHIMADA NAKAMURA Jin, Hiratsuka-shi, Kanagawa 254-0016 (JP); ODA Takafumi, Hiratsuka-shi, Kanagawa 254-0016 (JP)
(74) Representative: Vossius & Partner Patentanwälte Rechtsanwälte mbB
(86) International application number: PCT/JP2022/011341
(87) International publication number: WO 2022/219988

(57) **Abstract**

Provided is a hollow structure for fuel includes a polyamide resin layer (A), a polyamide resin layer (B), and a polyamide resin layer (C) in this order from an outside. The polyamide resin layer (B) contains a polyolefin, the polyamide resin layer (C) contains a conductive substance, and an amount of an eluate in an eluate test using a pseudo fuel in the hollow structure for fuel is 25 g/m² or less.

## Description

### Technical Field

The present invention relates to a hollow structure for fuel. In particular, it relates to a hollow structure for liquid fuel.

### Background Art

In recent years, strict exhaust gas regulations have been imposed from the perspective of prevention of environmental pollution, and hollow structures such as tubes, hoses and pipes used in applications such as fuel transportation are required to have high gas barrier properties for the purpose of suppressing volatile components such as volatile hydrocarbon atoms from permeating and diffusing into the atmosphere. Also, in recent years, alcohol gasoline in which alcohols such as methanol and ethanol have been blended are being put into practical use. Since alcohol gasoline has high permeability and easily volatilizes into the atmosphere, further enhancing the gas barrier properties of the hollow structures is important.

Typically, aliphatic polyamides such as polyamide 11 and polyamide 12 have been used as materials for hollow structures for fuel transportation because of their excellent chemical resistance. However, hollow structures formed from these aliphatic polyamides are excellent in toughness, chemical resistance and flexibility, but are not sufficient in fuel barrier properties, and improvement thereof has been desired.

On the other hand, xylylenediamine polyamide resins such as polymetaxylylene adipamide (MXD6) are known as resins having excellent fuel barrier properties.

Therefore, hollow structures for fuel in which these resins are combined have been studied.

For example, Patent Document 1 discloses a multilayer structure (a pipe, a hose, or a tube) including a polyamide layer (A) and a polyamide layer (B), in which the polyamide layer (A) includes a polyamide composition (A) including at least one polyamide (A1) selected from the group including a polyamide (a1) containing at least one of a structural unit derived from a lactam having from 10 to 12 carbon atoms and a structural unit derived from an aminocarboxylic acid having from 10 to 12 carbon atoms and a polyamide (a2) containing a structural unit derived from an aliphatic diamine having from 6 to 12 carbon atoms and a structural unit derived from an aliphatic dicarboxylic acid having from 10 to 12 carbon atoms, and in which the polyamide layer (B) includes a polyamide composition (B) including: a polyamide resin (b1) including a diamine unit containing 70 mol% or more of a structural unit derived from xylylenediamine and a dicarboxylic acid unit containing 70 mol% or more of a structural unit derived from an aliphatic dicarboxylic acid having 4 to 12 carbon atoms; a modified polyolefin (B2); and at least one polyamide (B3) selected from the group including a polyamide resin (b1) containing at least one of a structural unit derived from a lactam having from 6 to 12 carbon atoms and a structural unit derived from an aminocarboxylic acid having from 6 to 12 carbon atoms and a polyamide resin (b2) containing a structural unit derived from an aliphatic diamine having from 6 to 12 carbon atoms and a structural unit derived from an aliphatic dicarboxylic acid having from 10 to 12 carbon atoms, and a content of the modified polyolefin (B2) is from 5 to 15 parts by mass and a content of the polyamide (B3) is from 5 to 20 parts by mass based on 100 parts by mass of the polyamide resin (b1).

### Citation List

### Patent Documents

Patent Document 1: WO 2017/094564

### Summary of Invention

### Technical Problem

The hollow structure for fuel as described above is required to have fuel barrier properties and low-temperature impact resistance. Further, in recent years, the hollow structure for fuel is required to have conductivity. In order to achieve conductivity, it is conceivable to blend a conductive substance into a polyamide resin layer which is an inner layer (usually, an innermost layer) of the hollow structure. However, it has been found that the low-temperature impact resistance of the hollow structure is deteriorated when a conductive substance is blended into the polyamide resin layer. In order to improve the low-temperature impact resistance, it is conceivable to reduce the thickness of the polyamide resin layer containing a conductive substance or to ensure the low-temperature impact resistance by providing a highly flexible resin as an outer layer. However, it has been found that, when such a method is used, the fuel barrier properties may be poor. Therefore, in order to ensure the fuel barrier properties, it is also conceivable to provide an intermediate layer between the polyamide resin layer containing a conductive substance and the outer layer. However, when the adhesion between the intermediate layer and the polyamide resin layer containing a conductive substance or between the intermediate layer and the outer layer is poor, the low-temperature impact resistance is poor. Further, when the amount of an eluate from the hollow structure is large, there is an issue that the eluate is eluted into the fuel. Examples of the eluate from the hollow structure include a low molecular weight product such as a monomer or oligomer derived from a resin, and a plasticizer used for flexibility modification.

An object of the present invention is to solve such issues and to provide a hollow structure for fuel which is excellent in fuel barrier properties and adhesion between respective layers, has a small amount of an eluate, and is excellent in low-temperature impact resistance.

### Solution to Problem

As a result of studies made by the present inventors under the above issues, the above issues have been solved by forming a structure having at least three polyamide resin layers, blending a conductive substance in an inner layer of the three layers, blending a polyamide resin having high fuel barrier properties and a polyolefin in an intermediate layer of the three layers, and using a polyamide resin having high flexibility in an outer layer of the three layers.

Specifically, the issues described above have been solved by the following means:
<1> A hollow structure for fuel, including a polyamide resin layer (A), a polyamide resin layer (B), and a polyamide resin layer (C) in this order from an outside,
   in which the polyamide resin layer (A) contains a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms,
   in which the polyamide resin layer (B) contains a polyolefin, a polyamide (b1), and a polyamide (b2); a content of the polyolefin is from 5 to 40 mass% of the polyamide resin layer (B); and a mass ratio (b1/b2) between a content of the polyamide resin (b1) and a content of the polyamide resin (b2) is from 55/45 to 95/5, the polyamide resin (b1) containing: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) containing: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms,
   in which the polyamide resin layer (C) contains a conductive substance and a polyamide resin (c), and
   in which an amount of an eluate in an eluate test using a pseudo fuel in the hollow structure for fuel is 25 g/m² or less.
<2> The hollow structure for fuel according to <1>, in which the polyolefin contained in the polyamide resin layer (B) is an acid-modified polyolefin.
<3> The hollow structure for fuel according to <1> or <2>, in which the polyamide resin layer (A), the polyamide resin layer (B), and the polyamide resin layer (C) each contain a polyolefin, and when an amount of the polyolefin contained in the polyamide resin layer (A) is defined as P mass%, an amount of the polyolefin contained in the polyamide resin layer (B) is from 0.5 P to 2.0 P mass%, and an amount of the polyolefin contained in the polyamide resin layer (C) is from 0.5 P to 3.0 P mass%.
<4> The hollow structure for fuel according to <3>, in which each polyolefin contained in the polyamide resin layer (A), the polyamide resin layer (B) and the polyamide resin layer (C) is an acid-modified polyolefin.
<5> The hollow structure for fuel according to any one of <1> to <4>, in which, in the polyamide resin layer (B), a total of the polyolefin, the polyamide resin (b1), and the polyamide resin (b2) accounts for more than 95 mass% of the polyamide resin layer (B).
<6> The hollow structure for fuel according to any one of <1> to <5>, in which the conductive substance contains a conductive carbon compound.
<7> The hollow structure for fuel according to any one of <1> to <5>, in which the conductive substance contains carbon black and/or carbon nanotubes.
<8> The hollow structure for fuel according to any one of <1> to <7>, in which a content of the conductive substance in the polyamide resin layer (C) is from 3 to 30 mass%.
<9> The hollow structure for fuel according to any one of <1> to <8>, in which the polyamide resin layer (A) contains a plasticizer in a proportion of from 1 to 20 mass% in the polyamide resin layer (A).
<10> The hollow structure for fuel according to <9>, in which the polyamide resin layer (A), the polyamide resin layer (B), and the polyamide resin layer (C) each contain a polyolefin, and when an amount of the polyolefin contained in the polyamide resin layer (A) is defined as P mass%, an amount of the polyolefin contained in the polyamide resin layer (B) is from 0.5 P to 2.0 P mass%, and an amount of the polyolefin contained in the polyamide resin layer (C) is from 0.5 P to 3.0 P mass%.
<11> The hollow structure for fuel according to any one of <1> to <10>, in which 90 mol% or more of all structural units of the polyamide resin (c) are one or more of a structural unit derived from a lactam having from 6 to 12 carbon atoms, a structural unit derived from an aminocarboxylic acid having from 6 to 12 carbon atoms, a structural unit derived from an aliphatic dicarboxylic acid having from 6 to 12 carbon atoms, and a structural unit derived from an aliphatic diamine having from 6 to 12 carbon atoms.

### Advantageous Effects of Invention

According to the present invention, it is possible to provide a hollow structure for fuel which is excellent in fuel barrier properties and adhesion between respective layers, has a small amount of an eluate, and is excellent in low-temperature impact resistance.

### Brief Description of Drawings

FIG. 1 is a schematic diagram illustrating an example of a cross section of a hollow structure for fuel of the present invention.
FIG. 2 is an image diagram illustrating a method of an adhesion test in Examples.

### Description of Embodiments

Hereinafter, embodiments for carrying out the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

The hollow structure in the present specification is a structure having a hollow structure, is preferably sufficiently long in a longitudinal direction with respect to a cross section, includes a tube, a pipe, a hose, and the like, and is preferably a tube.

When a measurement method or the like of a standard set forth in the present specification differs depending on the year, it is based on the standard as of January 1, 2021, unless otherwise stated.

The hollow structure for fuel (hereinafter, sometimes simply referred to as "hollow structure") of the present embodiments is a hollow structure for fuel including a polyamide resin layer (A), a polyamide resin layer (B), and a polyamide resin layer (C) in this order from an outside, in which the polyamide resin layer (A) contains a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms; in which the polyamide resin layer (B) contains a polyolefin, a polyamide (b1), and a polyamide (b2); a content of the polyolefin is from 5 to 40 mass% of the polyamide resin layer (B); a mass ratio (b1/b2) between a content of the polyamide resin (b1) and a content of the polyamide (b2) is from 55/45 to 95/5, the polyamide resin (b1) containing: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) containing: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms, in which the polyamide resin layer (C) contains a conductive substance and a polyamide resin (c), and in which an amount of an eluate in an eluate test using a pseudo fuel in the hollow structure for fuel is 25 g/m² or less.

Through such a configuration, it is possible to provide a hollow structure for fuel which is excellent in fuel barrier properties and adhesion between respective layers, has a small amount of an eluate, and is excellent in low-temperature impact resistance.

### <Hollow structure for fuel>

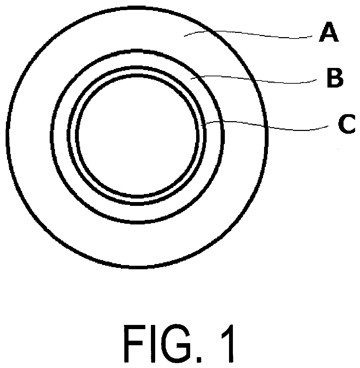

The hollow structure for fuel (hereinafter sometimes simply referred to as "hollow structure") in the present embodiments includes a polyamide resin layer (A) (hereinafter sometimes simply referred to as "layer (A)"), a polyamide resin layer (B) (hereinafter sometimes simply referred to as "layer (B)"), and a polyamide resin layer (C) (hereinafter sometimes simply referred to as "layer (C)") in this order from the outside. Specifically, FIG. 1 is a schematic diagram illustrating an example of a cross section of the hollow structure for fuel of the present invention, in which "A" represents a polyamide resin layer (A), "B" represents a polyamide resin layer (B), and "C" represents a polyamide resin layer (C).

In the hollow structure of the present embodiments, the polyamide resin layer (A) and the polyamide resin layer (B) may or may not be in contact with each other, but are usually in contact with each other. When the polyamide resin layer (A) and the polyamide resin layer (B) are not in contact with each other, an adhesive resin having an acid group or polyamide resin which adheres to both of the layers is preferably provided therebetween, and an adhesive resin having an acid group is more preferably provided therebetween. In the hollow structure of the present embodiments, the polyamide resin layer (B) and the polyamide resin layer (C) may or may not be in contact with each other, but are usually in contact with each other. When the polyamide resin layer (B) and the polyamide resin layer (C) are not in contact with each other, an adhesive resin having an acid group or polyamide resin which adheres to both of the layers is preferably provided therebetween, and an adhesive resin having an acid group is more preferably provided therebetween. Each of the polyamide resin layer (A), the polyamide resin layer (B), and the polyamide resin layer (C) may be one layer, or two or more layers. In addition, a layer may be additionally present inside the layer (C) and/or outside the layer (A). However, it is preferable that no layer is provided inside the layer (C).

A preferable layer configuration of the hollow structure of the present embodiments has the polyamide resin layer (A), the polyamide resin layer (B), and the polyamide resin layer (C) in this order from the outside, and it is preferable that the polyamide resin layer (A) and the polyamide resin layer (B) are in contact with each other, and that the polyamide resin layer (B) and the polyamide resin layer (C) are in contact with each other. Furthermore, it is preferable that no layer is provided outside the polyamide resin layer (C), that is, the polyamide resin layer (C) is the innermost layer.

A preferable layer configuration of the hollow structure of the present embodiments is as follows:
Layer (C)/Layer (B)/Layer (A)
Layer (C)/Layer (B)/Layer (B)/Layer (A)
Layer (C)/Layer (C)/Layer (B)/Layer (A)
Layer (C)/Layer (B)/Layer (A)/Layer (A)
Layer (C)/Layer (C)/Layer (B)/Layer (B)/Layer (A)
Layer (C)/Layer (B)/Layer (B)/Layer (A)/Layer (A)
Layer (C)/Layer (C)/Layer (B)/Layer (A)/Layer (A)
Layer (C)/Layer (C)/Layer (B)/Layer (B)/Layer (A)/Layer (A)

Further, in the above layer configuration, a layer configuration further having a layer provided inside the layer (C) is also preferable. Further, in the above layer configuration, a layer configuration further having a layer outside the layer (A) is also preferable.

When the hollow structure of the present embodiments has a layer other than the layers (A) to (C), examples of the layer include resin layers containing thermoplastic resins such as maleic anhydride-modified polyolefin, fluororesin, polyimide, polyamide, polyester, polystyrene, and vinyl chloride, and adhesive layers.

### <Polyamide resin layer (A)>

The polyamide resin layer (A) contains a polyamide resin (a), and 90 mol% or more of all structural units of the polyamide resin (a) are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms. By using the polyamide resin layer (A) containing the polyamide resin (a) having such relatively high flexibility, the low-temperature impact resistance can be improved.

In the polyamide resin (a), 90 mol% or more of all structural units are one or more of a structural unit derived from a lactam having from 10 to 12 carbon atoms, a structural unit derived from an aminocarboxylic acid having from 10 to 12 carbon atoms, a structural unit derived from an aliphatic dicarboxylic acid having from 6 to 12 carbon atoms, and a structural unit derived from an aliphatic diamine having from 6 to 12 carbon atoms, and it is preferable that 95 mol% or more of all the structural units include the above structural units, and it is more preferable that 99 mol% or more of all the structural units include the above structural units.

In addition, in the case where it contains both a structural unit derived from an aliphatic dicarboxylic acid having from 6 to 12 carbon atoms and a structural unit derived from an aliphatic diamine having from 6 to 12 carbon atoms, at least one of the structural units preferably has from 10 to 12 carbon atoms. A hollow structure more excellent in gas barrier properties is obtained by adopting such a configuration.

The polyamide resin (a) more preferably contains the following polyamide resins (a1) and/or (a2), and even more preferably contains the following polyamide resin (a1):
(a1) A polyamide resin in which 90 mol% or more of all structural units are a structural unit derived from a lactam having from 10 to 12 carbon atoms and/or a structural unit derived from an aminocarboxylic acid having from 10 to 12 carbon atoms (preferably a structural unit derived from a lactam having from 10 to 12 carbon atoms).
(a2) A polyamide resin in which 90 mol% or more of all structural units are a structural unit derived from an aliphatic dicarboxylic acid having from 6 to 12 carbon atoms and a structural unit derived from an aliphatic diamine having from 6 to 12 carbon atoms.

In the polyamide resin (a1), the number of carbon atoms of the structural unit derived from a lactam having from 10 to 12 carbon atoms and the structural unit derived from an aminocarboxylic acid having from 10 to 12 carbon atoms is preferably from 11 to 12 carbon atoms, and more preferably 12 carbon atoms from the perspective of flexibility, availability, and the like.

The structural unit derived from a lactam having from 10 to 12 carbon atoms and the structural unit derived from an aminocarboxylic acid having from 10 to 12 carbon atoms usually include an ω-aminocarboxylic acid unit represented by Formula (I) below:

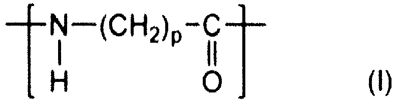

In Formula (I), p represents an integer of from 9 to 11, preferably from 10 to 11, and more preferably 11.

The polyamide resin (a1) may contain only one or two or more structural unit(s) represented by Formula (I).

Specific examples of a compound constituting the structural unit derived from a lactam having from 10 to 12 carbon atoms include decanelactam, undecanelactam, and dodecanelactam. Examples of a compound constituting the structural unit derived from an aminocarboxylic acid having from 10 to 12 carbon atoms include 10-aminodecanoic acid, 11-aminoundecanoic acid, and 12-aminododecanoic acid.

The polyamide resin (a1) may contain a structural unit other than the lactam-derived structural unit and the aminocarboxylic acid-derived structural unit. Examples of the other structural unit include a structural unit derived from a lactam other than the lactam having from 10 to 12 carbon atoms, a structural unit derived from an aminocarboxylic acid other than the aminocarboxylic acid having from 10 to 12 carbon atoms, a structural unit derived from a diamine, and a structural unit derived from a dicarboxylic acid.

Examples of lactams other than the lactam having from 10 to 12 carbon atoms include lactams having 3 to 9 carbon atoms, and specific examples thereof include ε-caprolactam, ω-enantholactam, α-pyrrolidone, and α-piperidone. Examples of the aminocarboxylic acid other than the aminocarboxylic acid having from 10 to 12 carbon atoms include 6-aminocaproic acid, 7-aminoheptanoic acid, and 9-aminononanoic acid. One of these can be used alone, or two or more thereof can be used in combination.

Examples of the diamine include aliphatic diamines such as ethylene diamine, propylene diamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine and 2,2,4- or 2,4,4-trimethylhexanediamine; cycloaliphatic diamines such as 1,3- or 1,4-cyclohexanediamine, 1,3- or 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propane, 5-amino-2,2,4-trimethylcyclopentanemethanamine, 5-amino-1,3,3-trimethylcyclohexanemethanamine, bis(aminopropyl) piperazine, bis(aminoethyl) piperazine, norbornanedimethylamine and tricyclodecanedimethylamine; and aromatic ring-containing diamines such as paraxylylenediamine and metaxylylenediamine. One of these can be used alone, or two or more thereof can be used in combination.

Examples of the dicarboxylic acid include aliphatic dicarboxylic acids such as adipic acid, pimelic acid, suberic acid, azelaic acid, sebacic acid, 1, 9-nonanedicarboxylic acid, 1,10-decanedicarboxylic acid, 1,11-undecanedicarboxylic acid and 1,12-dodecanedicarboxylic acid; alicyclic dicarboxylic acids such as 1,3-or 1,4-cyclohexanedicarboxylic acid, dicyclohexanemethane-4,4'-dicarboxylic acid and norbornanedicarboxylic acid; and aromatic dicarboxylic acids such as isophthalic acid, terephthalic acid and 1,4 -, 2,6-or 2,7-naphthalenedicarboxylic acid. One of these can be used alone, or two or more thereof can be used in combination.

The polyamide resin (a1) is preferably polyamide 11 containing at least one of an undecanelactam-derived structural unit and a 11-aminoundecanoic acid-derived structural unit as a main component, polyamide 12 containing at least one of a dodecanelactam-derived structural unit and a 12-aminododecanoic acid-derived structural unit as a main component, or a mixture of the polyamide 11 and the polyamide 12, and more preferably polyamide 12.

As for the polyamide resin (a1), reference can be made to the descriptions in paragraphs [0011] to [0019] of WO 2017/094564, the contents of which are incorporated herein by reference.

In the polyamide resins (a2), 90 mol% or more of all structural units are a structural unit derived from an aliphatic dicarboxylic acid having from 6 to 12 carbon atoms and a structural unit derived from an aliphatic diamine having from 6 to 12 carbon atoms. In the polyamide resins (a2), at least one of the structural unit derived from the aliphatic dicarboxylic acid having from 6 to 12 carbon atoms and the structural unit derived from the aliphatic diamine having from 6 to 12 carbon atoms preferably has from 10 to 12 carbon atoms, and more preferably both the structural unit derived from the aliphatic dicarboxylic acid having from 6 to 12 carbon atoms and the structural unit derived from the aliphatic diamine having from 6 to 12 carbon atoms have from 10 to 12 carbon atoms.

The aliphatic dicarboxylic acid having from 6 to 12 carbon atoms is preferably an aliphatic dicarboxylic acid having from 10 to 12 carbon atoms, and more preferably adipic acid, pimelic acid, suberic acid, azelaic acid, sebacic acid, 1,9-nonanedicarboxylic acid, 1,10-decanedicarboxylic acid, or the like. The polyamide resin (a2) may contain only one or two or more structural unit(s) derived from an aliphatic dicarboxylic acid having from 6 to 12 carbon atoms.

Examples of the dicarboxylic acid other than the aliphatic dicarboxylic acid having from 6 to 12 carbon atoms include aliphatic dicarboxylic acids having 5 or less carbon atoms or 13 or more carbon atoms, and aromatic dicarboxylic acids. Examples of the aliphatic dicarboxylic acid having 5 or less carbon atoms or 13 or more carbon atoms include succinic acid, glutaric acid, 1,11-undecanedicarboxylic acid, 1,12-dodecanedicarboxylic acid, 1,13-tridecanedicarboxylic acid, and 1,14-tetradecanedicarboxylic acid. Examples of the aromatic dicarboxylic acid include terephthalic acid, isophthalic acid, and 2,6-naphthalenedicarboxylic acid. One of these can be used alone, or two or more thereof can be used in combination.

On the other hand, the aliphatic group constituting the aliphatic diamine having from 6 to 12 carbon atoms is a linear or branched divalent aliphatic hydrocarbon group, and may be a saturated aliphatic group or an unsaturated aliphatic group, but is usually a linear saturated aliphatic group. The number of carbon atoms of the aliphatic group is preferably from 8 to 12, more preferably from 9 to 12, and even more preferably from 10 to 12. Examples of a compound that can constitute the diamine-derived structural unit of the polyamide resins (a2) include hexamethylenediamine, heptamethylenediamine, octamethylenediamine, nonamethylenediamine, decamethylenediamine, and undecamethylenediamine. One of these can be used alone, or two or more thereof can be used in combination.

The polyamide resin (a2) may contain a structural unit derived from an aliphatic diamine other than the structural unit derived from an aliphatic diamine having from 6 to 12 carbon atoms. Examples of diamines other than the aliphatic diamine having from 6 to 12 carbon atoms can include, but are not limited to, alicyclic diamines such as ethylenediamine, propylenediamine, tetramethylenediamine, pentamethylenediamine, 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane.; and diamines having an aromatic ring such as bis(4-aminophenyl)ether, paraphenylenediamine, and bis(aminomethyl)naphthalene. One of these can be used alone, or two or more thereof can be used in combination.

As for the polyamide resin (a2), reference can be made to the descriptions in paragraphs [0020] to [0027] of WO 2017/094564, the contents of which are incorporated herein by reference.

A content of the polyamide resin (a) in the polyamide resin layer (A) is preferably 50 mass% or more, more preferably 55 mass% or more, even more preferably 60 mass% or more, still more preferably 65 mass% or more, and even still more preferably 70 mass% or more. When the content is equal to or more than the lower limit value, the polyamide resin layer (A) tends to be more excellent in adhesion to the polyamide resin layer (B) while the fuel barrier properties of the polyamide resin layer (A) are ensured to some extent or more. In addition, the content of the polyamide resin (a) in the polyamide resin layer (A) is preferably 95 mass% or less, more preferably 90 mass% or less, even more preferably 86 mass% or less, and still more preferably 84 mass% or less. When the content is equal to or less than the upper limit value, an impact resistance modifier (for example, polyolefin) can be sufficiently added, and the obtained hollow structure tends to be more excellent in low-temperature impact resistance.

The polyamide resin layer (A) may contain only one or two or more polyamide resin(s) (a). When two or more polyamide resins are contained, the total amount thereof is preferably in the above range.

The polyamide resin layer (A) may also contain a polyolefin. By including a polyolefin in the polyamide resin layer (A), the low-temperature impact resistance can be further improved.

The polyolefin is preferably a homopolymer and/or a copolymer of an α-olefin such as ethylene, propylene or butene.

As the polyethylene, it is possible to use low density polyethylene (LDPE), linear low density polyethylene (LLDPE), very low density polyethylene (VLDPE), medium density polyethylene (MDPE), high density polyethylene (HDPE), or the like.

As the copolymer, a copolymer of at least two of ethylene, propylene and butene, or a copolymer of at least one of ethylene, propylene and butene and a monomer copolymerizable therewith can be used. Examples of the monomer that can be copolymerized with at least one of ethylene, propylene, and butene include α-olefins, styrenes, dienes, cyclic compounds, and oxygen atom-containing compounds. Particularly preferred copolymers include ethylene/butene copolymers and ethylene/propylene copolymers, with ethylene/butene copolymers being preferred.

As for the details of the α-olefins, the styrenes, the dienes, the cyclic compounds, and the oxygen atom-containing compounds, reference can be made to the description in paragraph [0044] of WO 2017/094564, the contents of which are incorporated herein by reference.

The copolymer may be any of an alternating copolymer, a random copolymer, and a block copolymer.

In the present embodiments, the polyolefin is preferably an acid-modified polyolefin. The acid-modified polyolefin is preferably a polyolefin acid-modified with a carboxylic acid and/or a derivative thereof, and a polyolefin acid-modified with a carboxylic acid and/or a derivative thereof and further having a polyamide graft-bonded thereto via a functional group introduced into the molecule by the acid modification (also referred to as "polyamide-graft-modified polyolefin"). By using the acid-modified polyolefin, a functional group having affinity for the polyamide resin (b) contained in the polyamide resin layer (B) can be introduced into the molecule. In addition, since the polyamide is further graft-modified via the functional group having affinity for the polyamide component, the affinity for the polyamide resin (b) can be further increased.

Preferred examples of the functional group having affinity for the polyamide component include a carboxylic acid group, a carboxylic anhydride group, a carboxylic acid ester group, a carboxylic acid metal salt group, a carboxylic acid imide group, a carboxylic acid amide group, and an epoxy group.

Preferred examples of a compound capable of acid-modifying a polyolefin include acrylic acid, methacrylic acid, maleic acid, fumaric acid, itaconic acid, crotonic acid, methylmaleic acid, methylfumaric acid, mesaconic acid, citraconic acid, glutaconic acid, cis-4-cyclohexene-1,2-dicarboxylic acid, endobicyclo[2.2.1]-5-heptene-2,3-dicarboxylic acid and metal salts of these carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2, 3-dicarboxylic acid anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. One of these can be used alone, or two or more thereof can be used in combination. Among these, maleic anhydride is preferable from the perspective of melt-miscibility with other resins.

The acid-modified polyolefin particularly preferably used in the embodiments include maleic anhydride-modified polyethylene, maleic anhydride-modified α-olefin copolymers such as maleic anhydride-modified ethylene/butene copolymers, and polyolefins graft-modified with aliphatic polyamides, from the perspective of elastic modulus, flexibility, and impact resistance. Among them, maleic anhydride-modified ethylene/butene copolymers are particularly preferably used.

Additionally, as for the polyolefin, reference can be made to the descriptions in paragraphs [0042] to [0056] of WO 2017/094564, the contents of which are incorporated herein by reference.

When the polyamide resin layer (A) contains a polyolefin, a content of the polyolefin is preferably 4 mass% or more, more preferably 7 mass% or more, even more preferably 10 mass% or more, and still more preferably 12 mass% or more. When the content is equal to or more than the lower limit value, the low-temperature impact resistance tends to be further improved. In addition, the content of the polyolefin in the polyamide resin layer (A) is preferably 30 mass% or less, more preferably 25 mass% or less, even more preferably 22 mass% or less, still more preferably 20 mass% or less,and even still more preferably 17 mass% or less. When the content is equal to or less than the upper limit value, the proportion of the polyamide resin (a) can be relatively increased, and the polyamide resin (a) can effectively exert its inherent fuel barrier properties.

The polyamide resin layer (A) may contain only one or two or more polyolefin(s). When two or more polyolefins are contained, the total amount thereof is preferably in the above range.

The polyamide resin layer (A) may contain a plasticizer. By including a plasticizer in the polyamide resin layer (A), the low-temperature impact resistance can be further improved. In particular, in the present embodiments, with the polyamide resin layer (B) having excellent fuel barrier properties, the amount of an eluate can be reduced even when a plasticizer is blended in the polyamide resin layer (A). That is, the fuel moves into the layer (C), the layer (B), and the layer (A) in this order, takes in the plasticizer, returns to the layer (B) and the layer (C) in this order, and can become an eluate eluted into the tube. In the present embodiments, the polyamide resin layer (B) having a high barrier function allows the movement of the fuel through the layers to be effectively suppressed, and the amount of the eluate can be suppressed to be low even when the plasticizer is blended.

Examples of the plasticizer include benzenesulfonic acid alkylamide, toluenesulfonic acid alkylamide, and hydroxybenzoic acid alkyl ester, and benzenesulfonic acid alkylamide is preferable.

Examples of benzenesulfonic acid alkylamide include benzenesulfonic acid propylamide, benzenesulfonic acid butylamide (N-butylbenzenesulfonamide), and benzenesulfonic acid 2-ethylhexylamide. Examples of the toluenesulfonic acid alkylamide include N-ethyl-o-toluenesulfonic acid butylamide, N-ethyl-p-toluenesulfonic acid butylamide, N-ethyl-o-toluenesulfonic acid 2-ethylhexylamide, and N-ethyl-p-toluenesulfonic acid 2-ethylhexylamide. Examples of the hydroxybenzoic acid alkyl ester include ethylhexyl o-hydroxybenzoate, ethylhexyl p-hydroxybenzoate, hexyldecyl o-hydroxybenzoate, hexyldecyl p-hydroxybenzoate, ethyldecyl o-hydroxybenzoate, ethyldecyl p-hydroxybenzoate, octyloctyl o-hydroxybenzoate, octyloctyl p-hydroxybenzoate, decyldodecyl o-hydroxybenzoate, decyldodecyl p-hydroxybenzoate, methyl o-hydroxybenzoate, methyl p-hydroxybenzoate, butyl o-hydroxybenzoate, butyl p-hydroxybenzoate, hexyl o-hydroxybenzoate, hexyl p-hydroxybenzoate, n-octyl o-hydroxybenzoate, n-octyl p-hydroxybenzoate, decyl o-hydroxybenzoate, decyl p-hydroxybenzoate, dodecyl o-hydroxybenzoate, and dodecyl p-hydroxybenzoate.

When the polyamide resin layer (A) contains a plasticizer, a content of the plasticizer is preferably 1 mass% or more, more preferably 2 mass% or more, even more preferably 3 mass% or more, and still more preferably 4 mass% or more. When the content is equal to or more than the lower limit value, the low-temperature impact resistance tends to be further improved. In addition, the content of the plasticizer in the polyamide resin layer (A) is preferably 20 mass% or less, more preferably 18 mass% or less, even more preferably 17 mass% or less, still more preferably 16 mass% or less, and even still more preferably 15 mass% or less. Furthermore, when the content is equal to or less than the upper limit value, the amount of the eluate can be made smaller.

The polyamide resin layer (A) may contain only one or two or more plasticizer(s). When two or more plasticizers are contained, the total amount thereof is preferably in the above range.

In the present embodiments, a mass ratio between the polyolefin and the plasticizer in the polyamide resin layer (A) is preferably from 1:0.2 to 1:3.5, more preferably from 1:0.2 to 1:2.0, even more preferably from 1:0.3 to 1:0.95, and still more preferably from 1:0.4 to 1:0.8. Within such a range, the amount of the eluate can be effectively reduced while the low-temperature impact resistance can be effectively maintained.

The polyamide resin layer (A) may contain other components in addition to the above components. Examples of the other components include a thermoplastic resin other than the polyamide resin (a), a conductive substance, an antioxidant, a heat stabilizer, an ultraviolet absorber, a light stabilizer, a lubricant, an inorganic filler, an antistatic agent, a flame retardant, a compatibilizer, a crystallization accelerator, and an impact resistance modifier other than the polyolefin. A total content of these other components is preferably 20 mass% or less, more preferably 15 mass% or less, and even more preferably 12 mass% or less.

According to the present embodiments, in the polyamide resin layer (A), a total content of the polyamide resin (a) and the polyolefin and the plasticizer which are blended as necessary accounts for preferably 90 mass% or more, more preferably 95 mass% or more, even more preferably 98 mass% or more, and still more preferably 99 mass% or more of the layer (A) .

The polyamide resin layer (A) is preferably substantially free of conductive substance. The term "substantially free" means that the content of the conductive substance contained in the polyamide resin layer (C) is 10 mass% or less, preferably 5 mass% or less, more preferably 3 mass% or less, and even more preferably 1 mass% or less.

A thickness of the polyamide resin layer (A) is preferably 10% or more, more preferably 30% or more, even more preferably 40% or more, still more preferably 50% or more, and even still more preferably 60% or more when a total thickness of the hollow structure is defined as 100%. When the thickness is equal to or more than the lower limit value, the low-temperature impact resistance of the hollow structure tends to be further improved. The thickness of the polyamide resin layer (A) is preferably 90% or less, more preferably 85% or less, even more preferably 80% or less, still more preferably 75% or less, and even still more preferably 72% or less when the total thickness of the hollow structure is defined as 100%. When the thickness is equal to or less than the upper limit value, the barrier layer and the conductive layer can be laminated with a functional thickness, and the fuel barrier properties and the conductivity tend to be further improved.

Also, the thickness of the polyamide resin layer (A) is preferably 100 µm or more, more preferably 300 µm or more, even more preferably 400 um or more, still more preferably 500 um or more, and even still more preferably 600 µm or more. Also, the thickness of the polyamide resin layer (A) is preferably 3000 µm or less, more preferably 2000 um or less, even more preferably 1100 um or less, still more preferably 900 µm or less, and even still more preferably 800 µm or less.

### <Polyamide resin layer (B)>

The polyamide resin layer (B) contains a polyolefin, a polyamide resin (b1), and a polyamide resin (b2). A content of the polyolefin is from 5 to 40 mass% of the polyamide resin layer (B), and a mass ratio (b1/b2) between a content of the polyamide resin (b1) and a content of the polyamide resin (b2) is from 55/45 to 95/5. The polyamide resin (b1) contains: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms. The polyamide resin (b2) contains: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms.

As described above, the polyamide resin layer (B) contains a polyolefin. By including a polyolefin, the low-temperature impact resistance of the hollow structure can be further improved.

The polyolefin is preferably an acid-modified polyolefin. The details of the polyolefin are synonymous with those described for the polyamide resin layer (A), and preferred ranges are also the same.

A content of the polyolefin in the polyamide resin layer (B) is preferably 5 mass% or more, more preferably 6 mass% or more, even more preferably 7 mass% or more, and still more preferably 8 mass% or more. When the content is equal to or more than the lower limit value, the low-temperature impact resistance tends to be further improved. The content of the polyolefin in the polyamide resin layer (B) is preferably 40 mass% or less, more preferably 35 mass% or less, even more preferably 28 mass% or less, still more preferably 25 mass% or less, and even still more preferably 18 mass% or less. When the content is equal to or less than the upper limit value, the fuel barrier properties can be further improved, and the amount of the eluate can be more effectively suppressed.

The polyamide resin layer (B) may contain only one or two or more polyolefin(s). When two or more polyolefins are contained, the total amount thereof is preferably in the above range.

As described above, the layer (B) contains the polyamide resins (b1) and (b2), and the mass ratio (b1/b2) between the content of the polyamide resin (b1) and the content of the polyamide resin (b2) is from 55/45 to 95/5. By blending the polyamide resin (b1), a hollow structure having excellent fuel barrier properties and a small amount of an eluate can be obtained. The adhesion between the layers (A) and (C) is improved by blending the polyamide resin (b2). Furthermore, the mass ratio (b1/b2) between the content of the polyamide resin (b1) and the content of the polyamide resin (b2) is set to the above-described predetermined ratio, and thus the fuel barrier properties and the adhesion can be achieved in a well-balanced manner.

In the polyamide resin (b1), the diamine-derived structural unit contains 70 mol% or more of a structural unit derived from metaxylylenediamine, and the dicarboxylic acid-derived structural unit contains 70 mol% or more of a structural unit derived from an aliphatic dicarboxylic acid having from 4 to 8 carbon atoms. By including the polyamide resin (b1), the fuel barrier properties of the hollow structure are enhanced. In addition, the amount of the eluate can be reduced.

In the polyamide resin (b1), the proportion of the structural unit derived from metaxylylenediamine in the diamine-derived structural unit is preferably 80 mol% or more, more preferably 90 mol% or more, even more preferably 95 mol% or more, and still more preferably 98 mol% or more.

The polyamide resin (b1) may contain a diamine unit other than the structural unit derived from metaxylylenediamine. Examples of the diamine unit include diamine units derived from compounds such as aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as paraxylylenediamine, bis(4-aminophenyl)ether, paraphenylenediamine, paraxylylenediamine, and bis(aminomethyl)naphthalene. One of these can be used alone, or two or more thereof can be used in combination.

In the polyamide resin (b1), the proportion of the structural unit derived from an aliphatic dicarboxylic acid having from 4 to 8 carbon atoms (preferably, adipic acid) in the dicarboxylic acid-derived structural unit is preferably 80 mol% or more, more preferably 90 mol% or more, even more preferably 95 mol% or more, and still more preferably 98 mol% or more.

The aliphatic dicarboxylic acid having from 4 to 8 carbon atoms is preferably an α,ω-linear aliphatic dicarboxylic acid having from 4 to 8 carbon atoms. The α,ω-linear aliphatic dicarboxylic acid having from 4 to 8 carbon atoms is, for example, succinic acid, glutaric acid, adipic acid, pimelic acid, suberic acid, or the like, and is preferably adipic acid. One of these can be used alone, or two or more thereof can be used in combination.

The polyamide resin (b1) may contain a dicarboxylic acid unit other than the structural unit derived from an aliphatic dicarboxylic acid having from 4 to 8 carbon atoms.

Examples of dicarboxylic acid units other than the structural unit derived from an aliphatic dicarboxylic acid having from 4 to 8 carbon atoms include aliphatic dicarboxylic acids having 3 or less carbon atoms such as oxalic acid and malonic acid; aliphatic carboxylic acids having 9 or more carbon atoms such as azelaic acid, sebacic acid, 1,10-decanedicarboxylic acid, 1,11-undecanedicarboxylic acid, 1,12-dodecanedicarboxylic acid, 1,13-tridecanedicarboxylic acid, and 1,14-tetradecanedicarboxylic acid; and aromatic dicarboxylic acids such as terephthalic acid, isophthalic acid, and 2,6-naphthalenedicarboxylic acid. One of these can be used alone, or two or more thereof can be used in combination.

In the polyamide resin (b2), the diamine-derived structural unit contains 70 mol% or more of a structural unit derived from xylylenediamine, and the dicarboxylic acid-derived structural unit contains 70 mol% or more of a structural unit derived from an aliphatic dicarboxylic acid having from 9 to 12 carbon atoms. By including the polyamide resin (b2), the adhesion between the polyamide resin layers (A) and (C) is improved.

In the polyamide resin (b2), the proportion of the structural unit derived from metaxylylenediamine in the diamine-derived structural unit is preferably 80 mol% or more, more preferably 90 mol% or more, even more preferably 95 mol% or more, and still more preferably 98 mol% or more.

The polyamide resin (b2) may contain a diamine unit other than the structural unit derived from metaxylylenediamine. Examples of the diamine unit include diamine units derived from compounds such as aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, paraxylylenediamine, and bis(aminomethyl)naphthalene. One of these can be used alone, or two or more thereof can be used in combination.

In the polyamide resin (b2), the proportion of the structural unit derived from an aliphatic dicarboxylic acid having from 9 to 12 carbon atoms (preferably, sebacic acid) in the dicarboxylic acid-derived structural unit is preferably 80 mol% or more, more preferably 90 mol% or more, even more preferably 95 mol% or more, and still more preferably 98 mol% or more.

The aliphatic dicarboxylic acid having from 9 to 12 carbon atoms is preferably an α,ω-linear aliphatic dicarboxylic acid having from 9 to 12 carbon atoms. Examples of the α,ω-linear aliphatic dicarboxylic acid having from 9 to 12 carbon atoms include azelaic acid, sebacic acid, 1,10-decanedicarboxylic acid, 1,11-undecanedicarboxylic acid, and 1,12-dodecanedicarboxylic acid, and sebacic acid is preferable. One of these can be used alone, or two or more thereof can be used in combination.

The polyamide resin (b2) may contain a dicarboxylic acid unit other than the structural unit derived from an aliphatic dicarboxylic acid having from 9 to 12 carbon atoms.

Examples of the dicarboxylic acid unit other than the structural unit derived from an aliphatic dicarboxylic acid having from 9 to 12 carbon atoms include aliphatic dicarboxylic acids having 8 or less carbon atoms such as succinic acid, glutaric acid, adipic acid, pimelic acid, and suberic acid; and aromatic dicarboxylic acids such as terephthalic acid, isophthalic acid, and 2,6-naphthalenedicarboxylic acid. One of these can be used alone, or two or more thereof can be used in combination.

In the polyamide resin layer (B), the mass ratio (b1/b2) between the content of the polyamide resin (b1) and the content of the polyamide resin (b2) is from 55/45 to 95/5, preferably from 55/45 to 89/11, and more preferably from 55/45 to 85/15, and may be from 65/35 to 85/15.

A total content of the polyamide resins (b1) and (b2) in the polyamide resin layer (B) is preferably 60 mass% or more, more preferably 65 mass% or more, even more preferably 75 mass% or more, still more preferably 80 mass% or more, and even still more preferably 85 mass% or more. When the total content is equal to or more than the lower limit value, the fuel barrier properties can be improved, the amount of the eluate can be further reduced, and the adhesion of the polyamide resin layer (B) to the polyamide resin layer (A) or (C) tends to be further improved. In addition, the total content of the polyamide resins (b1) and (b2) in the polyamide resin layer (B) is preferably 95 mass% or less, more preferably 94 mass% or less, even more preferably 93 mass% or less, and still more preferably 92 mass% or less. When the total content is equal to or less than the upper limit value, an impact resistance modifier can be sufficiently blended, and the low-temperature impact resistance tends to be more excellent.

The polyamide resin layer (B) may contain one or two or more of each of the polyamide resins (b1) and (b2). When two or more of each of the polyamide resins (b1) and (b2) are contained, the total amount thereof is preferably in the above range.

The polyamide resin layer (B) may contain other components in addition to the above components. Examples of the other components include a thermoplastic resin other than the polyamide resins (b1) and (b2), a conductive substance, a plasticizer, an antioxidant, a heat stabilizer, an ultraviolet absorber, a light stabilizer, a lubricant, an inorganic filler, an antistatic agent, a flame retardant, a crystallization accelerator, and an impact resistance modifier other than the polyolefin. A total content of these other components is preferably 20 mass% or less, more preferably 15 mass% or less, and even more preferably 12 mass% or less.

According to the present embodiments, in the polyamide resin layer (B), a total content of the polyamide resin (b1), the polyamide resin (b2), and the polyolefin accounts for preferably 90 mass% or more, more preferably more than 95 mass%, even more preferably 98 mass% or more, and still more preferably 99 mass% or more of the layer (B).

The polyamide resin layer (B) is preferably substantially free of conductive substance. The term "substantially free" means that the content of the conductive substance contained in the polyamide resin layer (C) is 10 mass% or less, preferably 5 mass% or less, more preferably 3 mass% or less, and even more preferably 1 mass% or less.

The polyamide resin layer (B) is preferably substantially free of plasticizer. The term "substantially free" means that the content of the plasticizer is 0.1 mass% or less, preferably 0.05 mass% or less, more preferably 0.03 mass% or less, and even more preferably 0.01 mass% or less of the polyamide resin layer (B) .

A thickness of the polyamide resin layer (B) is preferably 3% or more, more preferably 5% or more, even more preferably 10% or more, still more preferably 15% or more, and even still more preferably 18% or more when a total thickness of the hollow structure is defined as 100%. When the thickness is equal to or more than the lower limit value, the fuel barrier properties can be further improved, and the amount of the eluate can be more effectively suppressed. The thickness of the polyamide resin layer (B) is preferably 50% or less, more preferably 40% or less, even more preferably 35% or less, still more preferably 30% or less, and even still more preferably 26% or less when the total thickness of the hollow structure is defined as 100%. When the thickness is equal to or less than the upper limit value, the resin layer (A) can be laminated with a functional thickness, and both high fuel barrier properties and low-temperature impact resistance tend to be achieved.

Also, the thickness of the polyamide resin layer (B) is preferably 30 um or more, more preferably 100 µm or more, even more preferably 130 µm or more, still more preferably 150 um or more, and even still more preferably 180 µm or more. Also, the thickness of the polyamide resin layer (B) is preferably 1000 µm or less, more preferably 800 µm or less, even more preferably 700 um or less, still more preferably 400 µm or less, and even still more preferably 300 um or less.

### <Polyamide resin layer (C)>

The polyamide resin layer (C) contains a conductive substance and a polyamide resin (c).

The polyamide resin layer (C) contains a conductive substance. By including a conductive substance, the conductivity can be imparted to the hollow structure.

Examples of the conductive substance used in the present embodiments include metals, metal oxides, conductive carbon compounds, and conductive polymers, and conductive carbon compounds are preferable.

The metal is preferably a metal filler, a stainless fiber, or a magnetic filler. Examples of the metal oxide include alumina and zinc oxide, and alumina fibers and zinc oxide nanotubes are preferable. The conductive carbon compound is preferably carbon black, Ketjen carbon, graphene, graphite, fullerenes, carbon nanocoils, carbon nanotubes, or carbon fibers, is more preferably carbon black and/or carbon nanotubes, and is even more preferably carbon black.

A content of the conductive substance in the polyamide resin layer (C) is preferably 2 mass% or more, and more preferably 3 mass% or more, and may be 7 mass% or more, in the polyamide resin layer (C). When the content is equal to or more than the lower limit value, conductivity can be effectively imparted to the hollow structure. The content of the conductive substance in the polyamide resin layer (C) is preferably 30 mass% or less, more preferably 28 mass% or less, even more preferably 25 mass% or less, still more preferably 23 mass% or less, and even still more preferably 21 mass% or less in the polyamide resin layer (C). When the content is equal to or less than the upper limit value, the cold-temperature impact resistance of the hollow structure tends to be further improved.

The polyamide resin layer (C) may contain only one or two or more conductive substance(s). When two or more conductive substances are contained, the total amount thereof is preferably in the above range.

The polyamide resin layer (C) contains a polyamide resin (c). As long as the polyamide resin (c) is a polyamide resin, the type and the like thereof are not particularly limited, and the polyamide resin (c) may be an aliphatic polyamide resin or an aromatic polyamide resin. Examples of the aliphatic polyamide resin include polyamide 6, polyamide 66, polyamide 11, polyamide 12 and the like, and polyamide 66 is preferable. Examples of semi-aromatic polyamide resins include polyamide 6T, polyamide 9T, polyamide 10T, polyamide 6I, polyamide 9I, polyamide 6T/6I, and polyamide 9T/9I.

In the present embodiments, 90 mol% or more of all structural units of the polyamide resin (c) are preferably one or more of a structural unit derived from a lactam having from 6 to 12 carbon atoms, a structural unit derived from an aminocarboxylic acid having from 6 to 12 carbon atoms, a structural unit derived from an aliphatic dicarboxylic acid having from 6 to 12 carbon atoms, and a structural unit derived from an aliphatic diamine having from 6 to 12 carbon atoms. By using the polyamide resin layer (C) containing the polyamide resin, the adhesion of the polyamide resin layer (C) to the polyamide resin layer (B) tends to be further improved.

In the polyamide resin (c), 90 mol% or more of all structural units are one or more of a structural unit derived from a lactam having from 6 to 12 carbon atoms, a structural unit derived from an aminocarboxylic acid having from 6 to 12 carbon atoms, a structural unit derived from an aliphatic dicarboxylic acid having from 6 to 12 carbon atoms, and a structural unit derived from an aliphatic diamine having from 6 to 12 carbon atoms, and it is preferable that 95 mol% or more of all the structural units include the above structural units, and it is more preferable that 99 mol% or more of all the structural units include the above structural units.

In addition, in the case where both a structural unit derived from an aliphatic dicarboxylic acid having from 6 to 12 carbon atoms and a structural unit derived from an aliphatic diamine having from 6 to 12 carbon atoms are included, one of the structural units preferably has from 10 to 12 carbon atoms. A hollow structure more excellent in gas barrier properties is obtained by adopting such a configuration.

The polyamide resin (c) more preferably contains the following polyamide resins (c1) and/or (c2), and even more preferably contains the following polyamide resin (c1):
(c1) A polyamide resin in which 90 mol% or more of all structural units are a structural unit derived from a lactam having from 6 to 12 carbon atoms and/or a structural unit derived from an aminocarboxylic acid having from 6 to 12 carbon atoms (preferably a structural unit derived from a lactam having from 6 to 12 carbon atoms, more preferably a structural unit derived from a lactam having from 10 to 12 carbon atoms).
(c2) A polyamide resin in which 90 mol% or more of all structural units are a structural unit derived from an aliphatic dicarboxylic acid having from 6 to 12 carbon atoms and a structural unit derived from an aliphatic diamine having from 6 to 12 carbon atoms.

In the polyamide resin (c1), the number of carbon atoms of the structural unit derived from a lactam having from 6 to 12 carbon atoms and the structural unit derived from an aminocarboxylic acid having from 6 to 12 carbon atoms is preferably from 11 to 12 carbon atoms, and more preferably 12 carbon atoms from the perspective of flexibility, availability, and the like.

The structural unit derived from a lactam having from 6 to 12 carbon atoms and the structural unit derived from an aminocarboxylic acid having from 6 to 12 carbon atoms usually include an ω-aminocarboxylic acid unit represented by Formula (II) below:

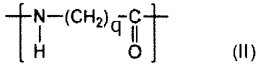

In Formula (II), q represents an integer of from 5 to 11, preferably an integer of from 9 to 11, more preferably from 10 to 11, and even more preferably 11.

The polyamide resin (c1) may contain only one or two or more structural unit(s) represented by Formula (II).

Specific examples of a compound constituting the structural unit derived from a lactam having from 6 to 12 carbon atoms include hexanlactam, heptalactam, octalactam, decanelactam, undecanelactam, and dodecanelactam. Examples of a compound constituting the structural unit derived from an aminocarboxylic acid having from 6 to 12 carbon atoms include 6-aminocaproic acid, 7-aminoheptanoic acid, 8-aminooctanoic acid, 9-aminononanoic acid, 10-aminodecanoic acid, 11-aminoundecanoic acid, and 12-aminododecanoic acid.

The polyamide resin (c1) may contain a structural unit other than the lactam-derived structural unit and the aminocarboxylic acid-derived structural unit. Examples of the other structural unit include a structural unit derived from a lactam other than the lactam having from 6 to 12 carbon atoms, a structural unit derived from an aminocarboxylic acid other than the aminocarboxylic acid having from 6 to 12 carbon atoms, a structural unit derived from a diamine, and a structural unit derived from a dicarboxylic acid.

Examples of lactams other than the lactam having from 6 to 12 carbon atoms include lactams having 3 to 5 carbon atoms, and specific examples thereof include α-pyrrolidone and α-piperidone.

Examples of the diamine include the diamines described above for the polyamide resin (a1). Examples of the dicarboxylic acid include the dicarboxylic acids described above for the polyamide resin (a1).

The polyamide resin (c1) is preferably polyamide 11 containing at least one of an undecanelactam-derived structural unit and a 11-aminoundecanoic acid-derived structural unit as a main component, polyamide 12 containing at least one of a dodecanelactam-derived structural unit and a 12-aminododecanoic acid-derived structural unit as a main component, or a mixture of the polyamide 11 and the polyamide 12, and more preferably polyamide 12.

As for the polyamide resin (c1), reference can be made to the descriptions in paragraphs [0011] to [0019] of WO 2017/094564, the contents of which are incorporated herein by reference.

In the polyamide resins (c2), 90 mol% or more of all structural units are a structural unit derived from an aliphatic dicarboxylic acid having from 6 to 12 carbon atoms and a structural unit derived from an aliphatic diamine having from 6 to 12 carbon atoms. In the polyamide resins (c2), at least one of the structural unit derived from the aliphatic dicarboxylic acid having from 6 to 12 carbon atoms and the structural unit derived from the aliphatic diamine having from 6 to 12 carbon atoms preferably has from 10 to 12 carbon atoms, and more preferably one of the structural unit derived from the aliphatic dicarboxylic acid having from 6 to 12 carbon atoms and the structural unit derived from the aliphatic diamine having from 6 to 12 carbon atoms have from 10 to 12 carbon atoms, and the structural unit derived from the aliphatic dicarboxylic acid having from 6 to 12 carbon atoms preferably has from 10 to 12 carbon atoms.

The aliphatic dicarboxylic acid having from 6 to 12 carbon atoms is preferably an aliphatic dicarboxylic acid having from 10 to 12 carbon atoms, and more preferably adipic acid, pimelic acid, suberic acid, azelaic acid, sebacic acid, 1,9-nonanedicarboxylic acid, 1,10-decanedicarboxylic acid, or the like. The polyamide resin (c2) may contain only one or two or more structural unit(s) derived from an aliphatic dicarboxylic acid having from 6 to 12 carbon atoms.

The dicarboxylic acids other than the aliphatic dicarboxylic acid having from 6 to 12 carbon atoms are synonymous with those described for the polyamide resin (a1), and preferred ranges are also the same. Furthermore, the details of the aliphatic group constituting the aliphatic diamine having from 6 to 12 carbon atoms are synonymous with those described for the polyamide resin (a1), and preferred ranges are also the same.

The polyamide resin (c2) may contain a structural unit derived from an aliphatic diamine other than the structural unit derived from an aliphatic diamine having from 6 to 12 carbon atoms. The details of these structural units are synonymous with those described for the polyamide resin (a1), and preferred ranges are also the same.

As for the polyamide resin (c2), reference can be made to the descriptions in paragraphs [0020] to [0027] of WO 2017/094564, the contents of which are incorporated herein by reference.

In the hollow structure of the present embodiments, it is particularly preferable to reduce the amount of the eluate eluted from the polyamide resin layer (C). An example of a means for reducing the amount of the eluate eluted from the polyamide resin layer (C) is to reduce the amount of the eluate in the polyamide resin (c). Examples of the eluate in the polyamide resin (c) include oligomers derived from the raw material for the polyamide resin (c).

The amount of the eluate in the polyamide resin (c) is preferably 25 g/m² or less, and more preferably 20 g/m² or less. A lower limit value of the amount of the eluate in the polyamide resins (c) is ideally 0 g/m², but the amount at which the eluate is not detected by the method described in Examples which will be described later will be substantially a lower limit value.

Examples of a means for achieving such an amount of the eluate include adjusting a method for synthesis of the polyamide resin (c) to make it difficult to produce a low molecular weight component, and washing the polyamide resin (c) after synthesis of the polyamide resin (c) (usually after preparation of pellets). The washing may be performed by immersing the pellets in water or an alcohol (preferably a lower alcohol, more preferably methanol or ethanol, even more preferably methanol). At this time, heating may be performed. In addition, the eluate can be more easily extracted by stirring.

A content of the polyamide resin (c) in the polyamide resin layer (C) is preferably 50 mass% or more, more preferably 55 mass% or more, even more preferably 60 mass% or more, and still more preferably 63 mass% or more, and may be 67 mass% or more. When the content is equal to or more than the lower limit value, the adhesion of the polyamide resin layer (C) to the polyamide resin layer (B) tends to be more excellent. In addition, the content of the polyamide resin (c) in the polyamide resin layer (C) is preferably 95 mass% or less, more preferably 90 mass% or less, and even more preferably 85 mass% or less, and may be 75 mass% or less. When the content is equal to or less than the upper limit value, the conductive substance and the impact resistance modifier can be sufficiently contained, and conductivity and cold-temperature impact resistance can be more effectively ensured.

The polyamide resin layer (C) may contain only one or two or more polyamide resin(s) (c). When two or more polyamide resins (c) are contained, the total amount thereof is preferably in the above range.

The layer (C) may also contain a polyolefin. By including a polyolefin, the low-temperature impact resistance can be further improved.

The polyolefin is preferably an acid-modified polyolefin. The details of the polyolefin are synonymous with those described for the polyamide resin layer (A), and preferred ranges are also the same.

When the polyamide resin layer (C) contains a polyolefin, a content of the polyolefin is preferably 4 mass% or more, more preferably 6 mass% or more, even more preferably 7 mass% or more, and still more preferably 8 mass% or more. When the content is equal to or more than the lower limit value, the low-temperature impact resistance tends to be further improved. In addition, the content of the polyolefin in the polyamide resin layer (C) is preferably 40 mass% or less, more preferably 35 mass% or less, even more preferably 28 mass% or less, still more preferably 25 mass% or less, and even still more preferably 18 mass% or less. When the content is equal to or less than the upper limit value, the adhesion of the polyamide resin layer (C) to the polyamide resin layer (B) tends to be more excellent.

The polyamide resin layer (C) may contain only one or two or more polyolefin(s). When two or more polyolefins are contained, the total amount thereof is preferably in the above range.

The polyamide resin layer (C) may contain other components in addition to the above components. Examples of the other components include a thermoplastic resin other than the polyamide resin (c), a plasticizer, an antioxidant, a heat stabilizer, an ultraviolet absorber, a light stabilizer, a lubricant, an inorganic filler, an antistatic agent, a flame retardant, a crystallization accelerator, and an impact resistance modifier other than the polyolefin. A total content of these other components is preferably 20 mass% or less, more preferably 15 mass% or less, and even more preferably 12 mass% or less.

According to the present embodiments, in the polyamide resin layer (C), a total content of the polyamide resin (c) and the conductive substance, as well as the polyolefin which is blended as necessary accounts for preferably 90 mass% or more, more preferably more than 95 mass%, even more preferably 97 mass% or more, and still more preferably 98 mass% or more of the layer (A).

The polyamide resin layer (C) is preferably substantially free of plasticizer. The term "substantially free" means that the content of the plasticizer is 0.1 mass% or less, preferably 0.05 mass% or less, more preferably 0.03 mass% or less, and even more preferably 0.01 mass% or less of the polyamide resin layer (C) .

A thickness of the polyamide resin layer (C) is preferably 3% or more, more preferably 5% or more, even more preferably 7% or more, still more preferably 8% or more, and even still more preferably 9% or more when a total thickness of the hollow structure is defined as 100%. When the thickness is equal to or more than the lower limit value, the thickness of the conductive layer tends to be stabilized, and the effect of conductivity tends to be further improved. The thickness of the polyamide resin layer (C) is preferably 30% or less, more preferably 25% or less, even more preferably 20% or less, still more preferably 18% or less, and even still more preferably 16% or less when the total thickness of the hollow structure is defined as 100%. When the content is equal to or less than the upper limit value, the hardness of the hollow structure tends to be reduced, and the cold-temperature impact resistance tends to be further improved.

Also, the thickness of the polyamide resin layer (C) is preferably 20 um or more, more preferably 40 µm or more, even more preferably 50 µm or more, still more preferably 70 µm or more, and even still more preferably 80 µm or more. Also, the thickness of the polyamide resin layer (C) is preferably 500 um or less, more preferably 400 µm or less, even more preferably 300 um or less, still more preferably 200 µm or less, and even still more preferably 150 µm or less.

### <Characteristics of hollow structure>

An amount of the eluate in an eluate test using a pseudo fuel in the hollow structure of the present embodiments is 25 g/m² or less.

Such a low amount of the eluate can be achieved, for example, by reducing the amount of the eluate in the polyamide resin (c) contained in the layer (C). That is, since the layer (C) is an inner layer, the amount of the eluate in the hollow structure can be effectively reduced by reducing the amount of the eluate in the layer (C). The polyamide resin (b1) is blended into the layer (B) to enhance the fuel barrier properties. That is, when the fuel barrier properties of the layer (B) is low, the fuel moves from the layer (C) as the inner layer to the layer (A) via the layer (B), and returns to the layer (B) and the layer (C) in this order. At this time, the fuel moves while containing a low molecular weight component contained in the layer (B) and/or the layer (A), particularly a compound such as a plasticizer, and returns to the layer (C). When the layer (C) contains a large amount of such a low molecular weight component, the low molecular weight component is eluted into the hollow structure as an eluate. In the present embodiments, such an issue can be effectively avoided by enhancing the fuel barrier properties of the layer (B).

The amount of the eluate is more preferably 25 g/m² or less. The lower limit value of the amount of the eluate is ideally 0 g/m², but the amount at which the eluate is not detected by the method described in Examples which will be described later will be substantially a lower limit value.

In the hollow structure of the present embodiments, each of the polyamide resin layer (A), the polyamide resin layer (B), and the polyamide resin layer (C) preferably contains a polyolefin. Through such a configuration, the low-temperature impact resistance can be more effectively improved. It is preferable that an amount of the polyolefin contained in the polyamide resin layer (B) is from 0.5 P to 2.0 P mass% (preferably 0.6 P mass% or more, further 0.8 P mass% or more, and also preferably 1.2 P mass% or less), and that an amount of the polyolefin contained in the polyamide resin layer (C) is from 0.5 P to 3.0 P mass% (preferably from 1.0 P to 1.6 P mass%), where an amount of the polyolefin contained in the polyamide resin layer (A) is P mass%. When the proportions of the polyolefins contained in the layer (A), the layer (B), and the layer (C) are about the same, the low-temperature impact resistance can be further improved. That is, when there is at least one layer having a low proportion of polyolefin, the low-temperature impact resistance tends to be deteriorated with the layer as a starting point. However, by adopting the configuration described above, stress is applied to each of the layers in a well-balanced manner, and remarkably excellent low-temperature impact resistance can be achieved.

Furthermore, in the hollow structure of the present embodiments, the polyolefin contained in each of the polyamide resin layer (A), the polyamide resin layer (B), and the polyamide resin layer (C) is preferably an acid-modified polyolefin.

In addition, in the hollow structure of the present embodiments having the above-described configuration, the polyamide resin layer (A) preferably contains a plasticizer. Through such a configuration, a hollow structure that is effectively excellent in both low-temperature impact resistance and low amount of the eluate can be obtained.

Further, the hollow structure of the present embodiments preferably includes a combination in which the polyamide resin (a) contains polyamide-12; in the polyamide resin (b1), 70 mol% or more of a diamine-derived structural unit is derived from metaxylylenediamine, and 70 mol% or more of a dicarboxylic acid-derived structural unit is derived from adipic acid; in the polyamide resin (b2), 70 mol% or more of a diamine-derived structural unit is derived from metaxylylenediamine, and 70 mol% or more of a dicarboxylic acid-derived structural unit is derived from sebacic acid; and the polyamide resin (c) contains polyamide-12. As described above, when all of the monomer units constituting the polyamide resins have an even number of carbon atoms, compatibility between the respective layers is improved, and a hollow structure having more excellent adhesion can be obtained.

The thicknesses of the polyamide resin layer (A), the polyamide resin layer (B), and the polyamide resin layer (C) in the hollow structure of the present embodiments are preferably such that the thickness of the layer (A) > the thickness of the layer (B) > the thickness of the layer (C). Further, a ratio of the thickness of the layer (A) to the thickness of the layer (B), i.e., the thickness of the layer (A)/the thickness of the layer (B), is preferably from 2.0 to 5.0, more preferably from 2.5 to 4.5. A ratio of the thickness of the layer (B) to the thickness of the layer (C) (i.e., the thickness of the layer (B)/the thickness of the layer (C)) is preferably from 1.0 to 3.0, more preferably from 1.5 to 2.5. Through such a layer configuration, the effect of the present invention tends to be more effectively exhibited.

A total thickness of the hollow structure of the present embodiments is not particularly limited as long as it is appropriately set according to the application, but is preferably 10 µm or more, more preferably 100 µm or more, even more preferably 500 um or more, and still more preferably 700 µm or more. An upper limit of the total thickness is preferably 5 mm or less, more preferably 3 mm or less, even more preferably 2 mm or less, and still more preferably 1.5 mm or less.

The hollow structure of the present embodiments can be suitably used as a fuel transportation piping material or the like. For example, it is particularly suitable as a fuel transportation piping material for alkanes such as hexane and octane; aromatic compounds such as toluene and benzene; alcohols such as methanol and ethanol; alcohol gasoline obtained by mixing isooctane, toluene and alcohol; and the like.

The hollow structure of the present embodiments can be produced by melt extrusion using an extruder, extrusion into a cylindrical shape through an annular die, shaping through a sizing former that controls the size, cooling in a water tank or the like, and winding up with a take-up machine.

Specifically, it can be produced by a method (coextrusion method) in which the materials constituting the layers (A), (B) and (C) are each melt-extruded using an extruder, and the extruded products are each fed into a die to form annular streams, which are then simultaneously extruded to the inside or outside of the die to laminate the layers, or a method (coating method) in which a single-layer hollow molded product is produced and laminated while integrating a resin using an adhesive on the outside as necessary. The conductive substance is preferably blended into the polyamide resin (c) or the like after being made into a master batch with a thermoplastic resin. The thermoplastic resin to be used in the formation of a master batch is preferably a polyamide resin.

At least a part of the hollow structure of the present embodiments may have a wavy region. Here, the wavy region refers to a region formed in a wavy shape, a bellows shape, an accordion shape, a corrugated shape, or the like. The hollow structure having the corrugated region can be easily formed by molding a formed straight tubular hollow structure, and then forming a predetermined wavy shape. Further, for example, a necessary component such as a connector may be added to the hollow structure, or the hollow structure may be formed into a shape such as an L shape or a U shape by bending.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### Raw Material

### <Polyamide resin layer (A)>

### Polyamide resin (a)

PA12: Polyamide 12, UBESTA3030U, available from Ube Industries, Ltd.
PA1010: Polyamide 1010, "Rilsan" TESN P213TL, available from Arkema S.A.
PA11: Polyamide 11, "Rilsan" P20TLD, available from Arkema S.A.

### Plasticizer

BBSA: N-butylbenzenesulfonamide, BM-4, available from Daihachi Chemical Industry Co., Ltd.

### Polyolefin

PO: 1 Mass% maleic anhydride-modified ethylene/butene copolymer, TAFMER MH5020, available from Mitsui Chemicals, Inc.

### <Polyamide resin layer (B)>

### Polyamide resin (b1)

MXD6: Synthesized according to the following synthesis example.

Precisely weighed 9000 g (61.6 mol) of adipic acid, 2.6 g of sodium hypophosphite monohydrate, and 1.0 g of sodium acetate were placed in a pressure-resistant reaction vessel having an internal volume of 50 L and equipped with a stirrer, a partial condenser, a total condenser, a pressure regulator, a thermometer, a dropping funnel and a pump, an aspirator, a nitrogen inlet tube, a bottom drain valve, and a strand die. The reaction vessel was thoroughly purged with nitrogen and then sealed, and the temperature was increased to 190°C under stirring while the pressure in the vessel was maintained at 0.4 MPa. After the temperature reached 190°C, dropwise addition of 8480 g (62.2 mol) of metaxylylenediamine stored in the dropping funnel, into the raw materials in the reaction vessel, was initiated, and the temperature in a reaction tank was raised to 250°C while condensed water that was produced was removed from the system and while the pressure in the vessel was maintained at 0.4 MPa. After the completion of dropwise addition of metaxylylenediamine, the pressure in the reaction vessel was gradually returned to normal pressure while the temperature was gradually raised to 260°C, and then an aspirator was used to reduce the pressure inside the reaction tank to 80 kPa and remove the condensed water. Agitation torque of the stirrer was observed under a reduced pressure, and agitation was terminated when a predetermined torque was reached. Then, the inside of the reaction tank was pressurized with nitrogen, the bottom drain valve was opened, and the polymer was extruded from the strand die to form a strand and then cooled and pelletized by using a pelletizer to obtain MXD6.

### Polyamide resin (b2)

MXD10: Synthesized according to the following synthesis example.

### <Synthesis Example of MXD10>

Precisely weighed 12564 g (62.2 mol) of sebacic acid, 3.2 g of sodium hypophosphite monohydrate, and 1.3 g of sodium acetate were placed in a pressure-resistant reaction vessel having an internal volume of 50 L and equipped with a stirrer, a partial condenser, a total condenser, a pressure regulator, a thermometer, a dropping funnel and a pump, an aspirator, a nitrogen inlet tube, a bottom drain valve, and a strand die. The reaction vessel was thoroughly purged with nitrogen and then sealed, and the temperature was increased to 190°C under stirring while the pressure in the vessel was maintained at 0.4 MPa. After the temperature reached 190°C, dropwise addition of 8480 g (62.2 mol) of metaxylylenediamine stored in the dropping funnel, into the raw materials in the reaction vessel, was initiated, and the temperature in a reaction tank was raised to 250°C while condensed water that was produced was removed from the system and while the pressure in the vessel was maintained at 0.4 MPa. After the completion of dropwise addition of metaxylylenediamine, the pressure in the reaction vessel was gradually returned to normal pressure while the temperature was gradually raised to 260°C, and then an aspirator was used to reduce the pressure inside the reaction tank to 80 kPa and remove the condensed water. Agitation torque of the stirrer was observed under a reduced pressure, and agitation was terminated when a predetermined torque was reached. Then, the inside of the reaction tank was pressurized with nitrogen, the bottom drain valve was opened, and the polymer was extruded from the strand die to form a strand and then cooled and pelletized by using a pelletizer to obtain MXD10.

### Polyolefin

PO: 1 Mass% maleic anhydride-modified ethylene/butene copolymer (TAFMER MH5020, available from Mitsui Chemicals, Inc.)

### <Polyamide resin layer (C)>

### Polyamide resin (c)

PA12: Polyamide 12, UBESTA3030U, available from Ube Industries, Ltd.

PA11: Polyamide 11, "Rilsan" P20TLDPA612, available from Arkema Inc.

PA612: polyamide 612, UBESTA7034B, available from Ube Industries, Ltd.

### Polyolefin

PO: 1 Mass% maleic anhydride-modified ethylene/butene copolymer, TAFMER MH5020, available from Mitsui Chemicals, Inc.

### Conductive substance

Carbon black: Ketjen Black EC300J, Lion Specialty Chemicals Co., Ltd.

Carbon nanotubes (CNT): NC7000, Nanocyl SA

### Examples 1 to 26 and Comparative Examples 1 to 9

### Production of polyamide resin layer (A)

The polyamide resin (a) was mixed with the polyolefin (PO) in advance so as to attain the mass proportions indicated in Tables 1 to 6, and the mixture was fed to a twin-screw melt-kneader (available from The Japan Steel Works, Ltd., model: TEX34αIII), and melt-kneaded at a cylinder temperature of from 180°C to 240°C. Benzenesulfonic acid butylamide as a plasticizer was injected into the middle of a cylinder of the twin-screw melt-kneader by a metering pump to extrude the molten resin in a strand shape, which was then introduced into a water tank, cooled, cut, and vacuum dried to obtain a composition (pellet) for forming the polyamide resin layer (A).

### <Production of polyamide resin layer (B)>

The polyamide resins (b1) and (b2) and the polyolefin (PO) were mixed in advance so as to attain the mass proportions indicated in Tables 1 to 6, and the mixture was fed to a twin-screw melt-kneader (available from The Japan Steel Works, Ltd., model: TEX34αIII), and melt-kneaded at a cylinder temperature of from 180°C to 260°C. The molten resin was extruded in a strand shape, then introduced into a water tank, cooled, cut, and vacuum dried to obtain a composition (pellet) for forming the polyamide resin layer (B).

### <Formation of master batch (MB) of conductive substance>

The polyamide resin (c) and the conductive substance were fed to a twin-screw melt-kneader (available from The Japan Steel Works, Ltd., model: TEX34αIII), and melt-kneaded at a cylinder temperature of from 180°C to 260°C. The molten resin was extruded in a strand shape, then introduced into a water tank, cooled, cut, and vacuum dried to obtain an MB (pellet) of the conductive substance.

### <Production of polyamide resin layer (C)>

The polyamide resin (c) was mixed with the polyolefin (PO) and the MB of the conductive substance obtained above in advance so as to attain the mass proportions indicated in Tables 1 to 6, and the mixture was fed to a twin-screw melt-kneader (available from The Japan Steel Works, Ltd., model: TEX34αIII), and melt-kneaded at a cylinder temperature of from 180°C to 260°C. The molten resin was extruded in a strand shape, then introduced into a water tank, cooled, cut, and vacuum dried to obtain a composition (pellet) for forming the polyamide resin layer (C).

The resin (c) before containing the conductive substance was washed. In Tables 1 to 6, in Examples and Comparative Examples in which the column "Whether resin (c) was washed" indicates "washed", the obtained pellet was stirred for 30 minutes in methanol heated to 60°C.

### <Production of hollow structure>

A multilayer hollow structure (outer diameter: 8 mm, inner diameter: 6 mm) including layer (A)/layer (B)/layer (C) in this order from the outside was formed, by means of a multilayer hollow structure molding machine equipped with five extruders, using the composition for forming the polyamide resin layer (A), the composition for forming the polyamide resin layer (B), and the composition for forming the polyamide resin layer (C), at an extrusion temperature of 240°C for the layer (A), an extrusion temperature of 260°C for the layer (B), an extrusion temperature of 240°C for the layer (C), and a post-lamination flow channel temperature of 260°C. In Comparative Example 6, a multilayer hollow structure including the layer (A) and the layer (C) (outer diameter: 8 mm, inner diameter: 6 mm) was used. The thickness of each layer was as indicated in Tables 1 to 6.

### <Low-temperature impact resistance>

The low-temperature impact resistance of the obtained multilayer hollow structure was evaluated by the following method.

The hollow structure obtained above was allowed to stand for 4 hours under the condition of -40°C, then a weight of 0.9 kg was dropped from a height of 300 mm to confirm whether a crack occurred, and the low-temperature impact resistance was evaluated as follows. C or higher is a practical level.
A: There was no crack in five hollow structures.
B: One or two out of five hollow structures was/were cracked.
C: Three or four out of five hollow structures were cracked.
D: Five out of five hollow structures were cracked.

### <Amount of eluate>

The amount of the eluate in the polyamide resin (c) and the amount of the eluate from the hollow structure were measured as follows.

Using the polyamide resin layer (c) obtained above, a single-layer hollow structure (outer diameter: 8 mm, inner diameter: 6 mm) consisted by an all-layer polyamide layer (c) was formed at an extrusion temperature of 240°C and a post-lamination flow channel temperature of 240°C by means of a multilayer hollow structure molding machine equipped with five extruders. A tube completely filled with fuel, in which 42 mL of CE10 (isooctane/toluene/ethanol = 45/45/10, volume ratio) was sealed, with stoppers, in 1.5 m of the obtained single-layer hollow structure, was placed under the condition of 60°C for 48 hours. One of the stoppers was then removed and the fuel was transferred to a vessel. The inside of the tube was washed three times with 10 mL of CE10. The vessel was capped, allowed to stand for 24 hours, followed by suction filtration using a filter with a pore size of 0.45 um (PES: polyehersulfone). After drying, the collected material was weighed. The amount of the eluate from the multilayer hollow structure was evaluated as follows. B or higher is a practical level.
A: 20 g/m² or less
B: More than 20 g/m² and 25 g/m² or less
C: More than 25 g/m²

### <Fuel barrier properties>

About 9 mL of CE10 was sealed in the 33 cm of the multilayer hollow structure prepared above, and the structure was allowed to stand in an atmosphere of 60°C. After sealing, the weight change of the hollow structure was measured after 100 hours, and an amount of CE10 permeated in 1 m² per day was calculated.

Evaluation was made as follows. B or higher is a practical level.
A: 10 g/m²·day or less
B: More than 10 g/m²·day and 15 g/m ²·day or less
C: More than 15 g/m ²·day and 20 g/m²·day or less
D: More than 20 g/m²·day

### <Adhesion>

The adhesion between the layer (A) and the layer (B), and the adhesion between the layer (B) and the layer (C) were evaluated as follows. In Comparative Example 6 in which the layer (B) was not provided, the adhesion was not evaluated.

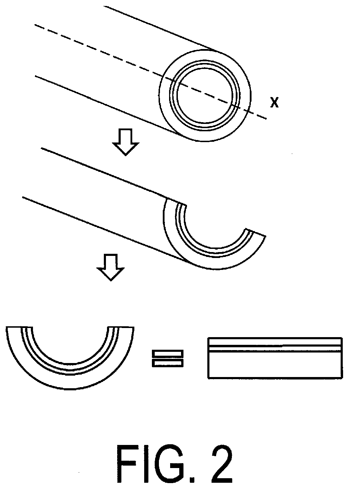

As indicated in the image diagram of FIG. 2, the multilayer hollow structure obtained above was produced, and then allowed to stand at 23°C and 50% relative humidity for one week, and, thereafter, cut in half at a cross section (X in FIG. 2) passing through the diameter in the longitudinal direction of the hollow structure to form a flat plate-shaped multilayer body including the polyamide resin layer (A)/the polyamide resin layer (B)/the polyamide resin layer (C). The polyamide resin layer (A) side and the polyamide resin layer (B), and the polyamide resin layer (B) and the polyamide resin layer (C) of the flat plate-shaped multilayer body were separated from each other using tweezers. In the configuration in which peeling occurred between the layers, the end of each peeled surface (polyamide resin (A) layer and polyamide resin (B) layer, or polyamide resin (B) layer and polyamide resin (C) layer) was fixed with a chuck, and the peel strength (T peel) was measured under the following conditions using a tensile tester so as to attract each other.
Test speed: 50 mm/min
Test environment: 23°C/50% relative humidity (RH)
Peeling angle: 90°C

Evaluation was made as follows. C or higher is a practical level.
A: Unpeelable (or peel stress of 20 N or more)
B: Peel stress of 15 N/cm or more and less than 20 N/cm
C: Peel stress 10 N/cm or more and less than 15 N/cm
D: Peel stress of less than 10 N/cm

**[Table 1]**

| | | Example 1 | Example 2 | Example 3 | Example 4 | Example 5 | Example 6 |
|---|---|---|---|---|---|---|---|
| Polyamide resin layer (A) | Resin (a) species | PA12 | PA12 | PA12 | PA12 | PA12 | PA12 |
| | Amount of resin (a) | 75 | 75 | 75 | 75 | 75 | 75 |
| | Plasticizer species | BBSA | BBSA | BBSA | BBSA | BBSA | BBSA |
| | Plasticizer amount | 10 | 10 | 10 | 10 | 10 | 10 |
| | PO amount | 15 | 15 | 15 | 15 | 15 | 15 |
| | Layer thickness | 700 | 700 | 700 | 700 | 700 | 700 |
| Polyamide resin layer (B) | (b1) MXD6 amount | 81 | 72 | 68 | 64 | 56 | 63 |
| | (b2) MXD10 amount | 9 | 18 | 12 | 16 | 14 | 27 |
| | (b1)/(b2) Ratio | 90/10 | 80/20 | 80120 | 80/20 | 80/20 | 70/30 |
| | Added PO amount | 10 | 10 | 15 | 20 | 30 | 10 |
| | Layer thickness | 200 | 200 | 200 | 200 | 200 | 200 |
| Polyamide resin layer (C) | Resin (c) species | PA12 | PA12 | PA12 | PA12 | PA12 | PA12 |
| | Added amount | 70 | 70 | 70 | 70 | 70 | 70 |
| | Added PO amount | 20 | 20 | 20 | 20 | 20 | 20 |
| | Conductive substance species | Carbon black | Carbon black | Carbon black | Carbon black | Carbon black | Carbon black |
| | Conductive substance species amount | 10 | 10 | 10 | 10 | 10 | 10 |
| | Resin (c) was washed or not | Washed | Washed | Washed | Washed | Washed | Washed |
| | Amount of eluate in resin (c) | 15 | 15 | 15 | 15 | 15 | 15 |
| | Layer thickness | 100 | 100 | 100 | 100 | 100 | 100 |
| Low-temperature impact resistance | | A | A | A | A | A | A |
| Eluate amount | | A | A | A | A | B | A |
| Fuel barrier properties | | A | A | A | B | B | A |
| Layer (A)/Layer (B) adhesion | | A | A | A | A | A | A |
| Layer (B)/Layer (C) adhesion | | A | A | A | A | A | A |

**[Table 2]**

| | | Example 7 | Example 8 | Example 9 | Example 10 | Example 11 | Example 12 |
|---|---|---|---|---|---|---|---|
| Polyamide resin layer (A) | Resin (a) species | PA12 | PA12 | PA12 | PA12 | PA12 | PA12 |
| | Resin (a) amount | 75 | 80 | 70 | 75 | 75 | 75 |
| | Plasticizer species | BBSA | BBSA | BBSA | BBSA | BBSA | BBSA |
| | Plasticizer amount | 10 | 5 | 15 | 10 | 10 | 10 |
| | PO amount | 15 | 15 | 15 | 15 | 15 | 15 |
| | Layer thickness | 700 | 700 | 700 | 700 | 700 | 700 |
| Polyamide resin layer (B) | (b1) MXD6 amount | 54 | 72 | 72 | 72 | 72 | 72 |
| | (b2) MXD10 amount | 36 | 18 | 18 | 18 | 18 | 18 |
| | (b1)/(b2) Ratio | 60/40 | 80/20 | 80/20 | 80/20 | 80/20 | 80/20 |
| | Added PO amount | 10 | 10 | 10 | 10 | 10 | 10 |
| | Layer thickness | 200 | 200 | 200 | 200 | 200 | 200 |
| Polyamide resin layer (C) | Resin (c) species | PA12 | PA12 | PA12 | PA12 | PA12 | PA12 |
| | Added amount | 70 | 70 | 70 | 65 | 60 | 77 |
| | Added PO amount | 20 | 20 | 20 | 20 | 20 | 20 |
| | Conductive substance species | Carbon black | Carbon black | Carbon black | Carbon black | Carbon black | CNT |
| | Conductive substance species amount | 10 | 10 | 10 | 15 | 20 | 3 |
| | Resin (c) was washed or not | Washed | Washed | Washed | Washed | Washed | Washed |
| | Amount of eluate in resin (c) | 15 | 15 | 15 | 15 | 15 | 15 |
| | Layer thickness | 100 | 100 | 100 | 100 | 100 | 100 |
| Low-temperature impact resistance | | A | A | A | A | B | A |
| Eluate amount | | A | A | B | A | A | A |
| Fuel barrier properties | | B | A | A | A | A | A |
| Layer (A)/Layer (B) adhesion | | A | A | A | A | A | A |
| Layer (B)/Layer (C) adhesion | | A | A | A | A | A | A |

**[Table 3]**

| | | Example 13 | Example 14 | Example 15 | Example 16 | Example 17 | Example 18 |
|---|---|---|---|---|---|---|---|
| Polyamide resin layer (A) | Resin (a) species | PA12 | PA12 | PA1010 | PA1010 | PA11 | PA12 |
| | Resin (a) amount | 75 | 75 | 75 | 80 | 75 | 75 |
| | Plasticizer species | BBSA | BBSA | BBSA | BBSA | BBSA | BBSA |
| | Plasticizer amount | 10 | 10 | 10 | 5 | 10 | 10 |
| | PO amount | 15 | 15 | 15 | 15 | 15 | 15 |
| | Layer thickness | 700 | 700 | 700 | 700 | 700 | 700 |
| Polyamide resin layer (B) | (b1) MXD6 amount | 72 | 72 | 72 | 72 | 72 | 72 |
| | (b2) MXD10 amount | 18 | 18 | 18 | 18 | 18 | 18 |
| | (b1)/(b2) Ratio | 80/20 | 80/20 | 80/20 | 80/20 | 80/20 | 80/20 |
| | Added PO amount | 10 | 10 | 10 | 10 | 10 | 10 |
| | Layer thickness | 200 | 200 | 200 | 200 | 200 | 200 |
| Polyamide resin layer (C) | Resin (c) species | PA12 | PA12 | PA12 | PA12 | PA12 | PA11 |
| | Added amount | 75 | 70 | 70 | 70 | 70 | 70 |
| | Added PO amount | 20 | 20 | 20 | 20 | 20 | 20 |
| | Conductive substance species | CNT | CNT | Carbon black | Carbon black | Carbon black | Carbon black |
| | Conductive substance species amount | 5 | 10 | 10 | 10 | 10 | 10 |
| | Resin (c) was washed or not | Washed | Washed | Washed | Washed | Washed | Washed |
| | Amount of eluate in resin (c) | 15 | 15 | 13 | 13 | 17 | 15 |
| | Layer thickness | 100 | 100 | 100 | 100 | 100 | 100 |
| Low-temperature impact resistance | | A | B | A | A | A | A |
| Eluate amount | | A | A | A | A | A | A |
| Fuel barrier properties | | A | A | A | A | A | A |
| Layer (A)/Layer (B) adhesion | | A | A | A | A | A | A |
| Layer (B)/Layer (C) adhesion | | A | A | A | A | A | A |

**[Table 4]**

| | | Example 19 | Example 20 | Example 21 | Example 22 | Example 23 | Example 24 |
|---|---|---|---|---|---|---|---|
| Polyamide resin layer (A) | Resin (a) species | PA12 | PA12 | PA12 | PA12 | PA12 | PA12 |
| | Resin (a) amount | 75 | 75 | 75 | 85 | 75 | 85 |
| | Plasticizer species | BBSA | BBSA | BBSA | BBSA | BBSA | BBSA |
| | Plasticizer amount | 10 | 10 | 10 | 0 | 10 | 10 |
| | PO amount | 15 | 15 | 15 | 15 | 15 | 5 |
| | Layer thickness | 700 | 700 | 700 | 700 | 700 | 700 |
| Polyamide resin layer (B) | (b1) MXD6 amount | 72 | 72 | 72 | 72 | 72 | 68 |
| | (b2) MXD10 amount | 18 | 18 | 18 | 18 | 18 | 12 |
| | (b1)/(b2) Ratio | 80/20 | 80/20 | 80/20 | 80/20 | 80/20 | 80/20 |
| | Added PO amount | 10 | 10 | 10 | 10 | 10 | 15 |
| | Layer thickness | 200 | 200 | 200 | 200 | 200 | 200 |
| Polyamide resin layer (C) | Resin (c) species | PA612 | PA12 | PA12 | PA12 | PA12 | PA12 |
| | Added amount | 70 | 80 | 65 | 70 | 90 | 70 |
| | Added PO amount | 20 | 10 | 25 | 20 | 0 | 20 |
| | Conductive substance species | Carbon black | Carbon black | Carbon black | Carbon black | Carbon black | Carbon black |
| | Conductive substance species amount | 10 | 10 | 10 | 10 | 10 | 10 |
| | Resin (c) was washed or not | Washed | Washed | Washed | Washed | Washed | Washed |
| | Amount of eluate in resin (c) | 15 | 15 | 15 | 15 | 15 | 15 |
| | Layer thickness | 100 | 100 | 100 | 100 | 100 | 100 |
| Low-temperature impact resistance | | A | A | A | C | C | C |
| Eluate amount | | A | A | A | A | A | A |
| Fuel barrier properties | | A | A | A | A | A | A |
| Layer (A)/Layer (B) adhesion | | A | A | A | A | A | A |
| Layer (B)/Layer (C) adhesion | | A | A | A | A | A | A |

**[Table 5]**

| | | Example 25 | Example 26 | Comparative Example 1 | Comparative Example 2 | Comparative Example 3 | Comparative Example 4 |
|---|---|---|---|---|---|---|---|
| Polyamide resin layer (A) | Resin (a) species | PA12 | PA12 | PA12 | PA12 | PA12 | PA12 |
| | Resin (a) amount | 85 | 75 | 75 | 75 | 75 | 75 |
| | Plasticizer species | BBSA | BBSA | BBSA | BBSA | BBSA | BBSA |
| | Plasticizer amount | 10 | 10 | 10 | 10 | 10 | 10 |
| | PO amount | 5 | 15 | 15 | 15 | 15 | 15 |
| | Layer thickness | 700 | 700 | 700 | 700 | 700 | 700 |
| Polyamide resin layer (B) | (b1) MXD6 amount | 76 | 72 | 90 | 36 | 0 | 80 |
| | (b2) MXD10 amount | 19 | 18 | 0 | 54 | 90 | 20 |
| | (b1)/(b2) Ratio | 80/20 | 80/20 | 100/0 | 40/60 | 0/100 | 80/20 |
| | Added PO amount | 5 | 10 | 10 | 10 | 10 | 0 |
| | Layer thickness | 200 | 200 | 200 | 200 | 200 | 200 |
| Polyamide resin layer (C) | Resin (c) species | PA12 | PA12 | PA12 | PA12 | PA12 | PA12 |
| | Added amount | 65 | 85 | 70 | 70 | 70 | 70 |
| | Added PO amount | 25 | 5 | 20 | 20 | 20 | 20 |
| | Conductive substance species | Carbon black | Carbon black | Carbon black | Carbon black | Carbon black | Carbon black |
| | Conductive substance species amount | 10 | 10 | 10 | 10 | 10 | 10 |
| | Resin (c) was washed or not | Washed | Washed | Washed | Washed | Washed | Washed |
| | Amount of eluate in resin (c) | 15 | 15 | 15 | 15 | 15 | 15 |
| | Layer thickness | 100 | 100 | 100 | 100 | 100 | 100 |
| Low-temperature impact resistance | | C | C | B | A | A | D |
| Eluate amount | | A | A | A | B | C | A |
| Fuel barrier properties | | A | A | A | C | D | A |
| Layer (A)/Layer (B) adhesion | | A | A | D | A | A | A |
| Layer (B)/Layer (C) adhesion | | A | A | D | A | C | A |

**[Table 6]**

| | | Comparative Example 5 | Comparative Example 6 | Comparative Example 7 | Comparative Example 8 | Comparative Example 9 |
|---|---|---|---|---|---|---|
| Polyamide resin layer (A) | Resin (a) species | PA12 | PA12 | PA12 | PA12 | PA12 |
| | Resin (a) amount | 75 | 75 | 75 | 75 | 75 |
| | Plasticizer species | BBSA | BBSA | BBSA | BBSA | BBSA |
| | Plasticizer amount | 10 | 10 | 10 | 10 | 10 |
| | PO amount | 15 | 15 | 15 | 15 | 15 |
| | Layer thickness | 700 | 900 | 700 | 700 | 700 |
| Polyamide resin layer (B) | (b1) MXD6 amount | 40 | - | 72 | 72 | 72 |
| | (b2) MXD10 amount | 10 | - | 18 | 18 | 18 |
| | (b1)/(b2) Ratio | 80/20 | - | 80/20 | 80/20 | 80/20 |
| | Added PO amount | 50 | - | 10 | 10 | 10 |
| | Layer thickness | 200 | - | 200 | 200 | 200 |
| Polyamide resin layer (C) | Resin (c) species | PA12 | PA12 | PA12 | PA612 | PA11 |
| | Added amount | 70 | 70 | 70 | 70 | 70 |
| | Added PO amount | 20 | 20 | 20 | 20 | 20 |
| | Conductive substance species | Carbon black | Carbon black | Carbon black | Carbon black | Carbon black |
| | Conductive substance species amount | 10 | 10 | 10 | 10 | 10 |
| | Resin (c) was washed or not | Washed | Washed | Not washed | Not washed | Not washed |
| | Amount of eluate in resin (c) | 15 | 15 | 26 | 26 | 26 |
| | Layer thickness | 100 | 100 | 100 | 100 | 100 |
| Low-temperature impact resistance | | A | A | A | A | A |
| Eluate amount | | C | C | C | C | C |
| Fuel barrier properties | | D | D | A | A | A |
| Layer (A)/Layer (B) adhesion | | B | - | A | A | A |
| Layer (B)/Layer (C) adhesion | | B | - | A | A | A |

As is clear from the above results, the hollow structure for fuel of the present invention was excellent in the fuel barrier properties and adhesion between the respective layers, small in amount of the eluate, and excellent in low-temperature impact resistance (Examples 1 to 26).

Furthermore, a plasticizer was blended into the polyamide resin layer (A), and thus the low-temperature impact resistance could be more effectively improved (comparison between Examples 1 to 21 and Example 22). In particular, the technical value is high in that even when the plasticizer was blended, the amount of the eluate was suppressed to be low.

Also, a polyolefin was blended into each of the polyamide resin layers (A) to (C) in about the same proportions, and thus the low-temperature impact resistance was more effectively improved (comparison between Examples 1 to 21 and Examples 23 to 26) .

Meanwhile, when the polyamide resin layer (B) did not contain the polyamide resin (b2) (Comparative Example 1), the adhesions between the respective layers were poor. When the amount of the polyamide resin (b1) in the polyamide resin layer (B) was small (Comparative Example 2), the fuel barrier properties were poor. The polyamide resin layer (B) did not contain the polyamide resin (b1) (Comparative Example 3), the fuel barrier properties were poor and the amount of the eluate was large.

Meanwhile, when the polyamide resin layer (B) did not contain the polyolefin (Comparative Example 4), the low-temperature impact resistance was poor. Further, even when the polyamide resin layer (B) contained the polyolefin, the fuel barrier properties were poor when the amount of the polyolefin blended was too large (Comparative Example 5).

Further, when the polyamide resin layer (B) was not provided (Comparative Example 6), the fuel barrier properties were poor.

Meanwhile, when the polyamide resin layer (C) was not washed (Comparative Examples 7 to 9), the amount of the eluate was increased.

### Reference Signs List

A: Polyamide resin layer (A)
B: Polyamide resin layer (B)
C: Polyamide resin layer (C)

## Claims

1. A hollow structure for fuel, comprising a polyamide resin layer (A), a polyamide resin layer (B), and a polyamide resin layer (C) in this order from an outside,
wherein the polyamide resin layer (A) comprises a polyamide resin (a), 90 mol% or more of all structural units of the polyamide resin (a) being one or more of: a structural unit derived from a lactam having from 10 to 12 carbon atoms; a structural unit derived from an aminocarboxylic acid having from 10 to 12 carbon atoms; a structural unit derived from an aliphatic dicarboxylic acid having from 6 to 12 carbon atoms; and a structural unit derived from an aliphatic diamine having from 6 to 12 carbon atoms,
wherein the polyamide resin layer (B) comprises a polyolefin, a polyamide resin (b1), and a polyamide resin (b2); a content of the polyolefin is from 5 to 40 mass% of the polyamide resin layer (B); and a mass ratio (b1/b2) between a content of the polyamide resin (b1) and a content of the polyamide resin (b2) is from 55/45 to 95/5, the polyamide resin (b1) comprising: a diamine-derived structural unit containing 70 mol% or more of a structural unit derived from metaxylylenediamine; and a dicarboxylic acid-derived structural unit containing 70 mol% or more of a structural unit derived from an aliphatic dicarboxylic acid having from 4 to 8 carbon atoms, the polyamide resin (b2) comprising: a diamine-derived structural unit containing 70 mol% or more of a structural unit derived from xylylenediamine; and a dicarboxylic acid-derived structural unit containing 70 mol% or more of a structural unit derived from an aliphatic dicarboxylic acid having from 9 to 12 carbon atoms,
wherein the polyamide resin layer (C) comprises a conductive substance and a polyamide resin (c), and
wherein an amount of an eluate in an eluate test using a pseudo fuel in the hollow structure for fuel is 25 g/m² or less.

2. The hollow structure for fuel according to claim 1, wherein the polyolefin contained in the polyamide resin layer (B) is an acid-modified polyolefin.

3. The hollow structure for fuel according to claim 1 or 2, wherein the polyamide resin layer (A), the polyamide resin layer (B), and the polyamide resin layer (C) each comprise a polyolefin, and when an amount of the polyolefin contained in the polyamide resin layer (A) is defined as P mass%, an amount of the polyolefin contained in the polyamide resin layer (B) is from 0.5 P to 2.0 P mass%, and an amount of the polyolefin contained in the polyamide resin layer (C) is from 0.5 P to 3.0 P mass%.

4. The hollow structure for fuel according to claim 3, wherein each polyolefin contained in the polyamide resin layer (A), the polyamide resin layer (B), and the polyamide resin layer (C) is an acid-modified polyolefin.

5. The hollow structure for fuel according to any one of claims 1 to 4, wherein, in the polyamide resin layer (B), a total of the polyolefin, the polyamide resin (B1), and the polyamide resin (B2) accounts for more than 95 mass% of the polyamide resin layer (B).

6. The hollow structure for fuel according to any one of claims 1 to 5, wherein the conductive substance comprises a conductive carbon compound.

7. The hollow structure for fuel according to any one of claims 1 to 5, wherein the conductive substance comprises carbon black and/or carbon nanotubes.

8. The hollow structure for fuel according to any one of claims 1 to 7, wherein a content of the conductive substance in the polyamide resin layer (C) is from 3 to 30 mass%.

9. The hollow structure for fuel according to any one of claims 1 to 8, wherein the polyamide resin layer (A) comprises a plasticizer in a proportion of from 1 to 20 mass% in the polyamide resin layer (A).

10. The hollow structure for fuel according to claim 9, wherein the polyamide resin layer (A), the polyamide resin layer (B), and the polyamide resin layer (C) each comprise a polyolefin, and when an amount of the polyolefin contained in the polyamide resin layer (A) is defined as P mass%, an amount of the polyolefin contained in the polyamide resin layer (B) is from 0.5 P to 2.0 P mass%, and an amount of the polyolefin contained in the polyamide resin layer (C) is from 0.5 P to 2.0 P mass%.

11. The hollow structure for fuel according to any one of claims 1 to 10, wherein 90 mol% or more of all structural units of the polyamide resin (c) are one or more of a structural unit derived from a lactam having from 6 to 12 carbon atoms, a structural unit derived from an aminocarboxylic acid having from 6 to 12 carbon atoms, a structural unit derived from an aliphatic dicarboxylic acid having from 6 to 12 carbon atoms, and a structural unit derived from an aliphatic diamine having from 6 to 12 carbon atoms.
